# EUROPEAN PATENT APPLICATION

(11) **EP 2 896 648 A1**
(43) Date of publication of application: **22.07.2015**
(21) Application number: 14195274.7
(22) Date of filing: 27.11.2014
(51) Int. Cl.: C08J 11/06, B29B 17/04, D21B 1/02, D21B 1/32, D21C 5/02

(54) **A process for recycling polylaminate materials**

(30) Priority: 21.01.2014 IT MO20140011
(71) Applicant: Edis S.p.A. Con Socio Unico, 41123 Modena (IT)
(72) Inventor: Pozzi, Paolo, 42015 CORREGGIO (REGGIO EMILIA) (IT); Schillaci, Marta, 94100 ENNA (IT); Generali, Andrea, 41121 MODENA (IT)
(74) Representative: Gagliardelli, Fabrizio

(57) **Abstract**

A process for recycling polylaminate starting material comprising the following steps: providing an amount of the starting material; shredding the starting material; macerating the shredded material, so as to obtain a primary mixture; subjecting said primary mixture to turbo-dissolution, so as to obtain a secondary mixture; filtering said secondary mixture, so as to define a moist pulp; and drying at least one semifinished product constituted by said pulp, so as to obtain a recycled material.

## Description

The present invention relates to a process for recycling articles made of a polylaminate material.

In detail, the invention relates to a process for recycling articles realised with polylaminates having a prevalently cellulose matrix and comprising adhesive substances.

It is known that recycling articles comprising adhesive paper, such as for example picture cards, presents significant problems due to the presence of glue and plastic film and/or aluminium film in the polylaminates with which they are made.

At present, articles made of adhesive paper are not recycled, as the glues and other components make treatment thereof problematic, according to the traditional paper-recycling method.

Only some types of polylaminates can be recycled, and using specific methodologies researched especially for the category of refuse, but in any case highly-toxic waste sludges are produced that are difficult and expensive to eliminate.

The technical task underpinning the present invention is therefore to disclose a process for recycling polylaminate material that obviates the drawbacks in the above-cited prior art.

In particular an aim of the present invention is to disclose a process for recycling polylaminate material which enables obtaining products destined for use as thermal insulation and/or sound-proofing as filler material for thermoplastics, and as shock-absorbent material.

The set technical objective and the specified aim are substantially attained by a process for recycling polylaminate material comprising the technical characteristics set forth in claim 1.

Further characteristics and advantages of the present invention will more fully appear from the indicative and therefore not limiting description of preferred but not exclusive embodiments of a process for recycling polylaminate material, as illustrated in the accompanying drawings, in which:
- figure 1 is a diagram representing the process of the invention according to a first embodiment; and
- figure 2 is a diagram representing the process in further embodiments thereof.

The process of the invention was devised for recycling of articles made of polylaminate material, especially of the type having a prevalently cellulose matrix.

In detail, the process of the invention is specially designed for recycling of laminated adhesive paper articles comprising glue, silicone and/or possibly comprising plastic and/or aluminium films.

An example of these articles is constituted by adhesive picture cards.

This kind of article typically comprises a laminated adhesive paper sheet and a rear siliconised paper support.

The processed picture cards can also comprise an agent which facilitates release of the printed paper from the support.

The starting material of the process of the invention is the polylaminate material in its entirety.

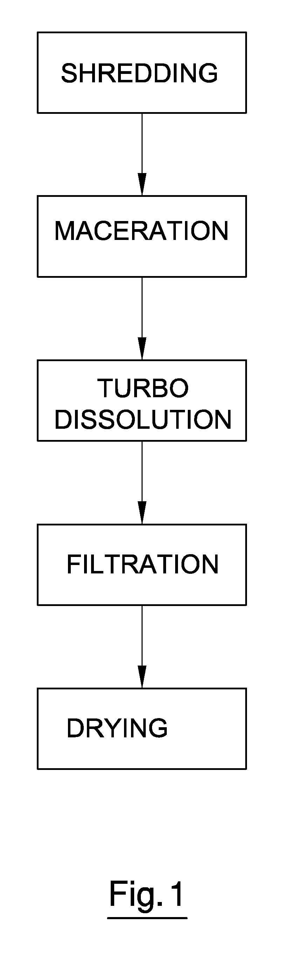

In the following, the invention is described in a generalised embodiment thereof in figure 1.

The starting material is first shredded so as to be reduced to elements having substantially homogeneous pieces.

The pieces are preferably in size between 1 mm and 8 mm.

Thereafter the shredded material is macerated so as to obtain a primary mixture provided with a first degree of homogeneity.

The preceding step of shredding gives the mixture subjected to maceration an increased specific surface, thus facilitating the absorption of the liquid of the macerating solution.

The maceration is preferably carried out in a neutral solution, with a percentage in weight comprised between 1% and 15% of polylaminate, as a function of the piece size of the material under process. The neutral solution has a temperature variable between 20°C and 80°C as a function of the dispersion kinetic of the material itself.

The step of maceration can have a duration comprised between 8 hours and 24 hours.

The step of maceration is optionally of a dynamic type, i.e. the mixture being macerated is subject to mechanical agitation, with a number of revolutions that varies from 100 to 600 revolutions per minute.

For this purpose an agitator can be used that is equipped with a perforated blade.

At this point, the above-mentioned primary mixture is subjected to turbo-dissolution, to produce a secondary mixture provided with a second degree of homogeneity that is greater than that of the primary mixture. The turbo-dissolution consists in a blade-activated agitation of the secondary mixture, optionally associated to a high-speed cutting action for a duration that is variable between 1 and 10 minutes.

In practice, during turbo-dissolution, the mixture is thickened and becomes more homogeneous.

Thereafter the secondary mixture is filtered so as to eliminate a consistent fraction of the liquid contained therein, so as to define a moist pulp.

Note that this moist pulp retains not only the cellulose, but also a significant part of the other components of the polylaminate starting material, comprising the silicone fraction.

The filtration can be actuated using a metal sieve with meshes of preferably 0.2 mm.

At this point the moist pulp, in the form of one or more semi-finished products, the conformation of which will be explained in the following, is dried in an oven so as to obtain the recycled material.

The drying can be done at a temperature of substantially 100°C up to a maximum of 200°C for a period that can vary between 5 and 15 hours. With the aim of making the drying step more efficient, it can optionally be preceded by a step of pressing the pulp, during which the pulp is further rid of the liquid fraction.

The recycled material obtained from the process of the invention can have various uses, listed out in the following.

Firstly, the recycled material can be used for thermal insulation and/or for sound-proofing, in the form of panels constituted by several layers of material, or in a loose form to be used as a filler of wall cavities.

Further, the recycled material can be used as a shock-absorbent material, following compacting.

Further, the recycled material can be used as a filler for thermoplastic products.

The above-indicated examples do not however exhaust the possibilities of application of the material obtained by means of the process of the invention.

The process of the invention advantageously enables recycling of cellulose polylaminates comprising adhesive, silicone, release agents, aluminium substances, and other materials, and re-utilise them for applications beyond the paper sector, without producing toxic waste sludges.

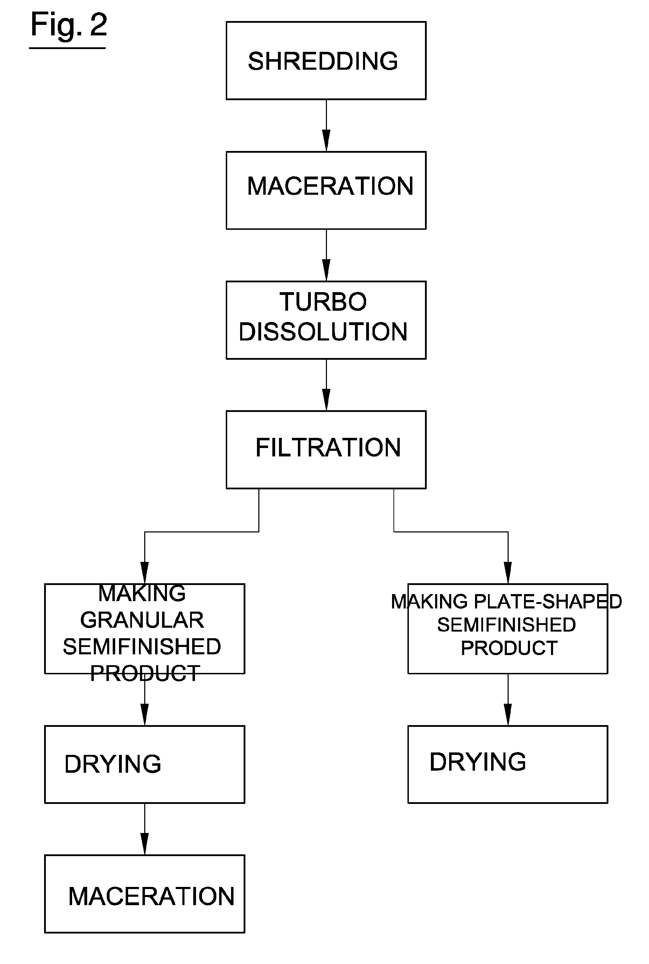

In the following some particular embodiments of the invention are illustrated, with the aid of the diagram of figure 2.

Before the step of drying described above, various types of semifinished products can be obtained, which once rid of the water content thereof become various different types of recycled material.

A type of semifinished product is of a granular type, for example formed by rubbing the above-mentioned pulp between two opposite surfaces, preferably activated in rotation.

The granulate thus-obtained can be dried by a drying process in a very short time.

The granulate of the invention can be optimally used as a filler for thermoplastics.

The invention is further especially suited to be used as a shock-absorbent material, following compacting by pressing of a single slab of moist pulp. The single slab can be dried in its entirety.

The granular material can then be ground to define a fibrous-type material that is an excellent thermo-acoustic insulation.

In practice, following maceration, flocks of recycled material are formed that can also be carded and woven to form products for upholstery or for manufacture of filters or more besides.

The described invention thus enables recycling of polylaminate material which is not recycled in known systems, if not at high cost and with the creation of toxic sub-products.

In detail, the process of the invention enables completely recycling picture cards in their entirety, so as to obtain materials utilizable for purposes lying beyond the paper sector.

## Claims

1. A process for recycling polylaminate starting material comprising the following steps:
a. providing an amount of said starting material;
b. shredding the starting material;
c. macerating the shredded material, so as to obtain a primary mixture;
d. subjecting said primary mixture to turbo-dissolution, so as to obtain a secondary mixture;
e. filtering said secondary mixture, so as to define a moist pulp: and
f. drying at least one semifinished product constituted by said pulp, so as to obtain a recycled material.

2. The process according to claim 1, wherein, following step e., said moist pulp is pressed, in such a manner as to remove a liquid fraction.

3. The process according to at least one of the preceding claims, wherein, prior to step f., a plurality of semifinished products of said pulp are formed.

4. The process according to the preceding claim, wherein said semifinished products are constituted by granules.

5. The process according to the preceding claim, wherein said granules are formed by rubbing the pulp between two surfaces.

6. The process according to claim 3, wherein said semifinished products are plate-shaped elements.

7. The process according to at least one of the preceding claims, wherein, during step b., said starting material is reduced to a size substantially equal to 3 mm.

8. The process according to at least one of the preceding claims, wherein step c. takes place in a neutral solution comprising a solution containing between 1% to 15% by weight of polylaminate material.

9. The process according to at least one of the preceding claims, wherein, during step c., the shredded material is subjected to mechanical agitation.

10. The process according to claim 4 or claim 5, wherein said granules, following the drying in step f., are ground so as to define a fibrous recycled material.

11. The process according to the preceding claim, wherein said fibrous material is roughed down in order to be woven.

12. The process according to at least one of the preceding claims, wherein said recycled material is employed for thermal insulation and/or sound-proofing.

13. The process according to at least one of the preceding claims, wherein said recycled material is used as filler for thermoplastic products.

14. The process according to at least one of the preceding claims, wherein said recycled material is used as shock-absorbent material.
